(19) Europäisches Patentamt
European Patent Office
Office européen des brevets

(11) **EP 2 725 696 A1**

(12) **EUROPEAN PATENT APPLICATION**
published in accordance with Art. 153(4) EPC

(43) Date of publication:
**30.04.2014 Bulletin 2014/18**

(51) Int Cl.:
*H02M 5/293* (2006.01)  *H02M 5/297* (2006.01)

(21) Application number: **11868306.9**

(22) Date of filing: **24.06.2011**

(86) International application number:
**PCT/JP2011/064520**

(87) International publication number:
**WO 2012/176327 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Hitachi, Ltd.**
**Tokyo 100-8280 (JP)**

(72) Inventors:
• **INOUE, Shigenori**
**Chiyoda-ku,**
**Tokyo 100-8280 (JP)**

• **KATOH, Shuji**
**Chiyoda-ku**
**Tokyo 100-8280 (JP)**

(74) Representative: **MERH-IP**
**Matias Erny Reichl Hoffmann**
**Paul-Heyse-Strasse 29**
**80336 München (DE)**

(54) **POWER CONVERSION DEVICE AND DEVICE FOR CONTROLLING SAME**

(57) An object of the present invention is to provide a power conversion unit making it possible to reduce the number of reactors and the number of IGBTs and realize a variable amplitude or variable frequency despite a simple configuration, and a control arrangement therefor. In order to accomplish the object, in the present invention, a leg is formed by coupling in series with one another a reactor, a first cluster that is a series body of plural unit cells, and a second cluster that is a series body of plural unit cells. Three legs are delta-connected. Three junction points of the delta-connected legs are coupled to the respective phases of a first three-phase AC facility, and junction points between the first and second clusters of the legs are coupled to the respective phases of a second three-phase AC facility.

*FIG. 1*

**Description**

Technical Field

The present invention relates to a power conversion unit and a control arrangement therefor. More particularly, the present invention is concerned with an AC-AC direct conversion type power conversion unit that converts one three-phase alternating-current (AC) power into another three-phase AC power of a variable amplitude or frequency, and a control arrangement therefor.

Background Art

A modular multilevel converter (MMC) is a circuit having series bodies (hereinafter, referred to as arms), each of which includes plural bidirectional chopper circuits and a reactor, coupled in a bridged manner, and represents a circuit method for rectifiers or inverters making it possible to output a voltage that is higher than a blocking voltage of a power semiconductor device employed in each unit cell.
For example, non-patent document 1 has disclosed that a direct current (DC) transmission system (HVDC) can be formed by coupling DC links of two MMCs.
By coupling the DC links of two three-phase MMCs, a first three-phase alternating-current (AC) power can be converted into a second three-phase AC power of a variable amplitude or frequency. Further, by applying the second three-phase AC power to an AC motor, the AC motor can be operated at a variable velocity. Therefore, the two MMCs can be adapted to a motor drive unit.

Citation List

Non-patent Literature

Non-patent literature 1: T. Westerweller, K. Friedrich, U. Armonies, A. Orini, D. Parquet, S. Wehn, "Trans Bay Cable - World's First HVDC System using Multilevel Voltage-sourced Converter," CIGRE 2010, B4_101_2010

Summary of Invention

Technical Problem

In an MMC, one reactor is needed for each arm. Therefore, in case two three-phase MMCs are used to form a motor drive unit, a total of twelve reactors are needed.
In case MMCs are used to form a high-voltage motor drive unit that is linked directly to, for example, a 6.6-kV system in a transformer-less manner, assuming that an insulated gate bipolar transistor (IGBT) whose blocking voltage is 4.5 kV is adopted, at least 144 on-off control switching elements such as IGBTs (hereinafter, simply referred to as IGBTs) are needed. The reason will be described below.
For linkage to the 6.6-kV system in a transformer-less manner, a series body of plural bidirectional chopper circuits included in each arm has to be able to output a phase voltage, that is, a voltage of $6.6/\sqrt{3}$ approximately equal to 3.8 kV.
Assuming that a DC capacitor voltage of one bidirectional chopper circuit is 2.25 kV that is 50% of the blocking voltage of 4.5 kV of IGBTs, and a maximum modulation factor is 0.9, an effective value of a maximum AC voltage which the one bidirectional chopper circuit can output is $2.25/2/\sqrt{2}\times0.9$ approximately equal to 0.716 kV.
By dividing 3.8 kV by 0.716 kV, a necessary number of bidirectional chopper circuits needed for each arm is determined. 3.8/0.716 approximately equal to 5.31 ensues. At least six bidirectional chopper circuits are needed, where 6 is an integer exceeding 5.31.
A three-phase MMC to be coupled to a 6.6-kV system is formed by coupling six arms, each of which includes six bidirectional chopper circuits and one reactor, in a bridged manner, and a three-phase MMC to be coupled to an AC motor is formed by coupling six other arms in the bridged manner. Therefore, twelve arms are needed in total. As for the number of bidirectional chopper circuits, at least 6x6x2=72 circuits are needed.
Since at least two IGBTs are needed for one bidirectional chopper circuit, 2x72=144 IGBTs are needed for the total of 72 chopper cells.
Accordingly, an object of the present invention is to provide a power conversion unit making it possible to realize a variable amplitude or frequency despite a simple configuration while reducing the number of reactors and the number of IGBTs, and a control arrangement therefor. Solution to Problem
In order to accomplish the above object, in the present invention, a leg is formed by coupling in series with one another a reactor, a first cluster that is a series body of plural unit cells, and a second cluster that is a series body of plural unit cells. Three legs are delta-connected. Three junction points of the delta-connected legs are coupled to the respective phases of a first three-phase AC facility, and junction points between the first and second clusters of the legs are coupled to the respective phases of a second three-phase AC facility.

One of the first three-phase AC facility and second three-phase AC facility is a power system.

Both the first three-phase AC facility and second three-phase AC facility are power systems.

The first three-phase AC facility is a power system, and the second three-phase AC facility is a motor.

The unit cells are two-terminal elements capable of outputting an arbitrary voltage.

The unit cells can output a positive, negative, or zero voltage, and each include an energy storage element.

Each of the unit cells is formed with a full bridge circuit.

In order to accomplish the foregoing object, in the present invention, in a control arrangement for a power conversion unit in which: a leg is formed by coupling in series with one another a reactor, a first cluster that is a series body of plural unit cells, and a second cluster that is a series body of plural unit cells; three legs are delta-connected; three junction points of the delta-connected legs are coupled to the respective phases of a first three-phase Ac facility; and junction points between the first and second clusters of the legs are coupled to the respective phases of a second three-phase AC facility, control is extended so that the sum of an active power produced with a frequency component of the first three-phase AC facility of an output voltage of each of the clusters and a frequency component of the first three-phase AC facility of a current flowing through each of the clusters, and an active power produced with a frequency component of the second three-phase AC facility of the output voltage of each of the clusters and a frequency component of the second three-phase AC facility of the current flowing through each of the clusters becomes substantially zero.

In order to accomplish the foregoing object, in the present invention, in a control arrangement for a power conversion unit in which: a leg is formed by coupling in series with one another a reactor, a first cluster that is a series body of plural unit cells, and a second cluster that is a series body of plural unit cells; three legs are delta-connected; three junction points of the delta-connected legs are coupled to the respective phases of a first three-phase AC facility; and junction points between the first and second clusters of the legs are coupled to the respective phases of a second three-phase AC facility, control is extended so that the sum of a reactive power produced with a frequency component of the first three-phase AC facility of an output voltage of each of the clusters and a frequency component of the first three-phase AC facility of a current flowing through each of the clusters, and a reactive power produced with a frequency component of the second three-phase AC facility of the output voltage of each of the clusters and a frequency component of the second three-phase AC facility of the current flowing through each of the clusters becomes substantially zero.

In order to accomplish the foregoing object, in the present invention, in a control arrangement for a power conversion unit in which: a leg is formed by coupling in series with one another a reactor, a first cluster that is a series body of plural unit cells, and a second cluster that is a series body of plural unit cells; three legs are delta-connected; three junction points of the delta-connected legs are coupled to the respective phases of a first three-phase AC facility; and junction points between the first and second clusters of the legs are coupled to the respective phases of a second three-phase AC facility, three first control signals are obtained with line currents of the first three-phase AC facility regarded as target signals, three second control signals are obtained with line currents of the second three-phase AC facility regarded as target signals, and the first and second clusters of each of the legs are controlled based on a sum signal of the first control signal and second control signal on the lines involved with the clusters.

Advantageous Effects of Invention

Compared with a high-voltage motor drive unit of a type employing two MMCs, a power conversion unit in accordance with the present invention enables reduction in the number of necessary reactors and the number of necessary IGBTs.

According to, for example, an embodiment of a high-voltage motor drive unit linked to a 6.6-kV system in a transformer-less manner, the number of reactors can be reduced from twelve to three, and the number of IGBTs can be reduced from 144 to 120. The reason will be described later in relation to a first embodiment.

Brief Description of Drawings

Fig. 1 is a diagram showing an example of a high-voltage motor drive unit employing a power conversion unit of the present invention.
Fig. 2 is a diagram showing the internal configuration of a unit cell.
Fig. 3 is a vector diagram showing the relationship of currents and voltages of circuit components shown in Fig. 1.
Fig. 4 is a diagram showing waveforms of voltages and currents of components observed when output voltages of clusters are controlled.
Fig. 5 is a diagram showing the configuration of a leg having reactors symmetrically disposed.
Fig. 6 is a configuration diagram in which a power interchange unit is realized using a power conversion unit of the present invention.
Fig. 7 is a diagram presenting an output voltage control method for a unit cell.
Fig. 8 is a diagram showing an example of a control arrangement for a power conversion unit of the present invention.

Description of Embodiments

Embodiments of the present invention will be described below in conjunction with the drawings.

First Embodiment

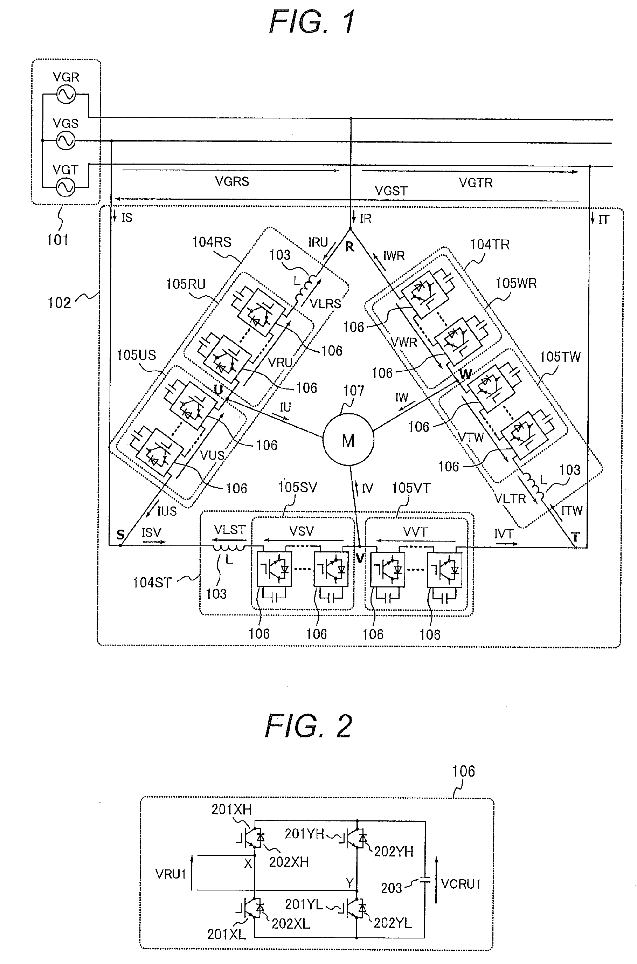

Fig. 1 shows the configuration of a power conversion unit in accordance with a first embodiment of the present invention.
In the embodiment shown in Fig. 1, a high-voltage motor drive unit 102 is formed that: has three legs 104, each of which is a series body of one reactor 103, a first cluster 105 formed with a series body of five unit cells 106, and a second cluster 105 formed with a series body of five unit cells 106, delta-connected; has junction points, at which the three legs 104 are delta-connected, coupled to, for example, a 6. 6-kV power system 101; has three junction points between the first and second clusters 105 of the legs 104 coupled to an AC motor 107; converts a power obtained from the 6.6-kV power system 101 into a variable-amplitude or variable-frequency power; and feeds the power to the AC motor 107.
Compared with a related art employing two MMCs, the first embodiment has the advantage of enabling reduction in the number of reactors and the number of IGBTs. The reason and a reason why the number of unit cells 106 included in each of the clusters 105 is five will be described later successively to a description of the configuration and principle of operation of the high-voltage motor drive unit of the present embodiment.
The overall configuration of the first embodiment will be described below in conjunction with Fig. 1.
A high-voltage motor drive unit 102 is coupled to a three-phase power system 101 and a three-phase AC motor 107, and controls a power to be transferred between the power system 101 and AC motor 107. Herein, the phases of the three-phase power system 101 are denoted with R, S, and T respectively, and the phases of the three-phase AC motor are denoted with U, V, and W respectively. The phase voltages of the three-phase power system 101 are denoted with VGR, VGS, and VGT respectively, and the line voltages of the three-phase power system 101 are denoted with VGRS, VGST, and VGTR respectively.
The high-voltage motor drive unit 102 includes legs 104 for the lines of the three-phase power system 101. The leg provided for the R and S phases of the three-phase power system 101 is a leg 104RS. Likewise, the leg provided for the S and T phases is a leg 104ST, and the leg provided for the T and R phases is a leg 104TR.
Each of the legs 104 is formed with a series body of one reactor 103, a first cluster 105, and a second cluster 105. Junction points between the first clusters and second clusters are coupled to the respective phases U, V, and W of the three-phase AC motor 107.
For example, the RS-phase leg 104RS coupled to the R phase and S phase of the power system 101 is a series body of the reactor 103, RU-phase cluster 105RU, and US-phase cluster 105US. The junction point between the RU-phase cluster 105US and US-phase cluster 105US is called a U point, and the U point is coupled to the U phase of the AC motor 107.
The ST-phase leg 104ST coupled to the S phase and T phase of the power system 101 is a series body of the reactor 103, SV-phase cluster 105SV, and VT-phase cluster 105VT. The junction point between the SV-phase cluster 105SV and VT-phase cluster 105VT is called a V point, and the V point is coupled to the V phase of the AC motor 107.
The TR-phase leg 104TR coupled to the T phase and R phase of the power system 101 is a series body of the reactor 103, TW-phase cluster 105TW, and WR-phase cluster 105WR. The junction point between the TW-phase cluster 105TW and WR-phase cluster 105WR is called a W point, and the W point is coupled to the W phase of the AC motor 107.
Each of the clusters 105RU, 105US, 105SV, 105VT, 105TW, and 105WR is a series body of five unit cells 106.
In the foregoing description, two alphabets (any of R, S, T, U, V, and W) appended to a numeral (104 or 105) signifying a device denotes lines onto which the device is coupled. In addition, one alphabet (R, S, T, U, V, or W) appended to a voltage or current (VG or I) signifies that the voltage or current has a relevant phase. Hereinafter, the alphabets (R, S, T, U, V, and W) appended to numerals or alphabets will signify the phases or lines according to the above denotation approach, though a description will not especially be made.
The internal configuration of the unit cell 106 and an output voltage control method therefor will be described below. Thereafter, the principle of operation of the high-voltage motor drive unit 102 will be described. To begin with, the internal configuration of the unit cell 106 will be described in conjunction with Fig. 2.

Fig. 2 shows as an example the internal configuration of a first unit cell of the cluster 105RU. The unit cell 106 is a full bridge circuit and includes two legs (X-phase leg and Y-phase leg) and a DC capacitor 203 coupled to each of the legs. The X-phase leg is a series body of a parallel body including an IGBT 201XH and antiparallel diode 202XH and a parallel body including an IGBT 201XL and antiparallel diode 202XL. The Y-phase leg is a series body of a parallel body including an IGBT 201YH and antiparallel diode 202YH and a parallel body including an IGBT 201YL and antiparallel diode 202YL.

In the thus-configured unit cell 106, an output of the unit cell is fetched as a potential difference VRU1 between a parallel-body junction point X of the X-phase leg and a parallel-body junction point Y of the Y-phase leg. The DC capacitor 203 is coupled to the upper and lower terminals of the legs 201 that are coupled to each other in parallel with each other. The terminal voltage of the DC capacitor 203 is denoted with VCRU1. In the embodiment shown in Fig. 2, the unit cell is formed using IGBTs. As long as semiconductor switching elements are employed, the unit cell is not limited to the IGBTs.

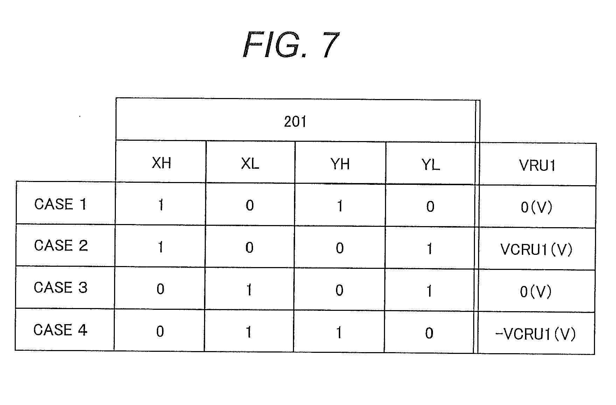

Next, the output voltage control method for the unit cell will be described in conjunction with Fig. 7. The output voltage VRU1 of the unit cell 106 can be controlled through switching of four semiconductor switching elements IGBTs (201XH, 201XL, 201YH, and 201YL) included in the full bridge circuit. Now, the relationship of the on/off states of the IGBTs to the output voltage of the unit cell will be described below by taking for instance the first cell of the RU-phase cluster 104RU.

In this case, the effective combinations of on and off states of the four semiconductor switching elements are, as shown in Fig. 7, four combinations described below.

The first combination is such that the element 201XH is on, the element 201XL is off, the element 201YH is on, and the element 201YL is off. In this case, the output voltage VRU1 is substantially zero.

The second combination is such that the element 201XH is on, the element 201XL is off, the element 201YH is off, and the element 201YL is on. In this case, the output voltage VRU1 is substantially equal to the DC capacitor voltage VCRU1.

The third combination is such that the element 201XH is off, the element 201XL is on, the element 201YH is off, and the element 201YL is on. In this case, the output voltage VRU1 is substantially zero.

The fourth combination is such that the element 201XH is off, the element 201XL is on, the element 201YH is on, and the element 201YL is off. In this case, the output voltage VRU1 is substantially equal to a voltage -VCRU1 whose polarity is opposite to that of the DC capacitor voltage.

Other combinations may be made. For example, as a combination causing the legs to be strapped, the elements 201XH and 201XL are simultaneously turned on. In this case, the DC capacitor 203 is short-circuited. Therefore, the actions are inhibited. Likewise, when the elements 201YH and 201YL are simultaneously turned on, the DC capacitor 203 is short-circuited. Therefore, the actions are inhibited.

The principle of operation of the high-voltage motor drive unit 102 will be described below.

Each of the clusters 105 is a series body having the output terminals (X node and Y node in Fig. 2) of five unit cells 106 coupled in series with one another. Therefore, the terminal voltage of, for example, the cluster 105RU is the sum of terminal voltages of the five unit cells 106 forming the cluster 105RU. In the example shown in Fig. 2, the terminal voltage of the first unit cell is denoted with VRU1. Assuming that the other unit cell voltages are denoted with VRU2, VRU3, VRU4, and VRU5 respectively, the sum of the voltages becomes the terminal voltage VRU of the cluster 105RU.

The relationship is also established for the output voltages (VRU, VUS, VSV, VVT, VTW, and VWR) of all the clusters 105. Each of the output voltages is the sum of output voltages of five unit cells 106 included in each of the clusters. Therefore, by controlling the on/off states of IGBTs included in each of the unit cells 106, the output voltage (VRU, VUS, VSV, VVT, VTW, or VWR) of each of the clusters can be controlled.

By adopting phase-shift pulse-width modulation (PWM), the output voltages VRU, VUS, VSV, VVT, VTW, and VWR of the respective clusters can be controlled to be arbitrary waves having a frequency component equal to or lower than a triangle-wave carrier frequency.

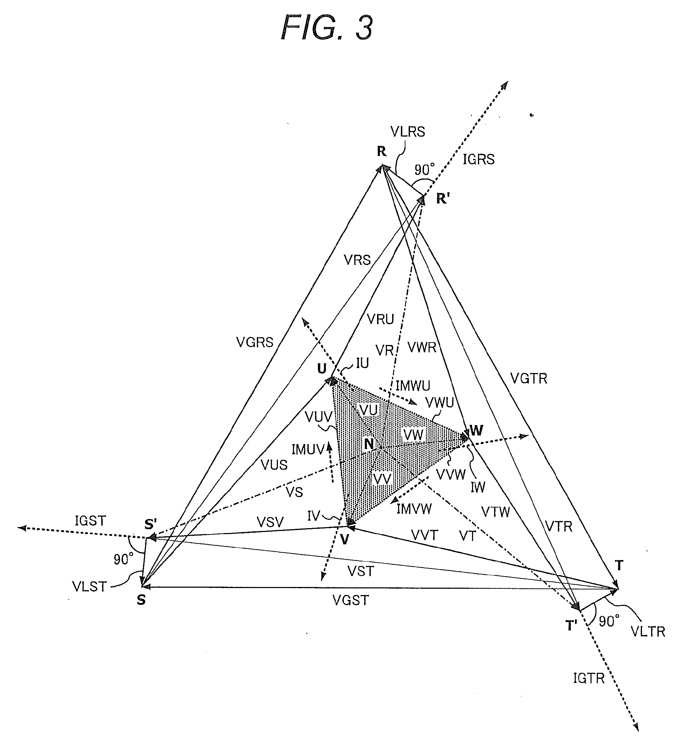

A description will be made below by noting only a frequency component of the power system 101 (hereinafter, referred to as a system frequency component), which is a must for the function of the high-voltage motor drive unit 102, and a frequency component of the AC motor 107 (hereinafter, referred to as a motor frequency component) out of frequency components contained in the output voltages (VRU, VUS, VSV, VVT, VTW, and VWR) of the clusters. To begin with, the principle of operation of the high-voltage motor drive unit 102 will be outlined below. Thereafter, the principle of operation will be detailed in conjunction with Fig. 3.

As shown in Fig. 1, the high-voltage motor drive unit 102 is coupled to each of the power supply (power system 101) and load (AC motor 107), and transfers an active or reactive power to or from the power supply and load. Therefore, in the high-voltage motor drive unit 102, circuit connections to the power system 101 and actions, and circuit connections to the AC motor 107 and actions are present.

In the high-voltage motor drive unit 102, for the power system 101, the RU-phase cluster 105RU and US-phase cluster 105US act as a first pair coupled to the R and S phases of the power system 101. The SV-phase cluster 105SV

and VT-phase cluster 105VT act as a second pair coupled to the S and T phases of the power system 101. The TW-phase cluster 105TW and WR-phase cluster 105WR act as a third pair coupled to the T and R phases of the power system 101. The pairs transfer an active or reactive power to or from the power system 101.

In contrast, for the AC motor 107, the US-phase cluster 105US and SV-phase cluster 105SV act as a first pair coupled to the U and V phases of the AC motor 107. The VT-phase cluster 105VT and TW-phase cluster 105TW act as a second pair coupled to the V and W phases of the AC motor 107. The WR-phase cluster 105WR and RU-phase cluster 105RU act as a third pair coupled to the W and R phases of the AC motor 107. The pairs transfer an active or reactive power to or from the AC motor 107.

If an active power each of the clusters 105 receives from the power system 101 is equal to an active power to be fed to the AC motor 107, inflow energy and outflow energy of the DC capacitors 202 of the unit cells 106 forming each of the clusters 105 are balanced. By substantially sustaining the balanced state, overcharge or over-discharge of the DC capacitors 202 can be avoided. Accordingly, the high-voltage motor drive unit 102 can be operated uninterruptedly. A control method for a DC capacitor voltage will be detailed later.

Referring to Fig. 3, the principle of operation of the high-voltage motor drive unit 102 will be detailed below. Fig. 3 is a vector diagram showing the relationship of currents and voltages of circuit components shown in Fig. 1.

In the vector diagram of Fig. 3, R, S, and T denote power supply-side junction points shown in Fig. 1, and VGRS, VGST, and VGTR denote inter-junction point voltages, that is, line voltages of the power system 101. Hereinafter, the voltages shall be referred to as system line voltages.

The system line voltages (VGRS, VGST, and VGTR) are applied to the respective terminals (R, S, and T) of the legs 104. Each of the legs 104 is a series body of the reactor 103, first cluster, and second cluster. Therefore, Fig. 3 shows the inter-junction point voltages of the elements.

To begin with, the junction point voltage between the reactor 103 and first cluster will be described by taking for instance the leg 104RS. Assuming that the junction point between the reactor 103 and first cluster 105RU is denoted with R', the terminal voltage VLRS of the reactor 103 is a voltage that lags 90° behind the system line voltage VGRS. The relationship is also established with respect to the other system line voltages VGST and VGTR. However, the junction points are denoted with S' and T' respectively, and the terminal voltages of the reactors 103 are denoted with VLST and VLTR respectively.

As a result, a voltage to be applied to the terminals of the first and second clusters (hereinafter, referred to as a leg voltage) is a voltage VRS between the junction point R' and junction point S in the case of the leg 104RS. Likewise, in the case of the leg 104ST, the leg voltage is a voltage VST between the junction point S' and junction point T. In the case of the leg 104TR, the leg voltage is a voltage VTR between the junction point T' and junction point R.

Next, the junction point voltage between the first cluster and second cluster will be described below by taking for instance the leg 104RS. The junction point between the first cluster 105RU and second cluster 105US is the U point. The terminal voltage of the cluster 105RU is denoted with VRU, and the terminal voltage of the second cluster 105US is denoted with VUS. The sum of the voltages VRU and VUS is the leg voltage VRS. Likewise, in the case of the leg 104ST, the junction point is the V point, the voltages of the clusters are denoted with VSV and VVT, and the sum of the voltages VSV and VVT is the leg voltage VST. In the case of the leg 104TR, the junction point is the W point, the voltages of the clusters is denoted with VTW and VWR, and the sum of the voltages VTW and VWR is the leg voltage VTR.

In Fig. 1, a current flowing from the junction point R into the leg 104RS is denoted with IRU, and a current flowing out from the leg 104RS to the junction point S is denoted with IUS, though the currents are not shown in Fig. 3. Likewise, in Fig. 1, a current flowing from the junction point S into the leg 104ST is denoted with ISV, and a current flowing out from the leg 104TR to the junction point T is denoted with IVT. A current flowing from the junction point T into the leg 104TR is denoted with ITW, and a current flowing out from the leg 104TR to the junction point R is denoted with IWR.

A current flowing in or out from the junction point R, S, or T is not shown in Fig. 3. However, a system frequency component contained in common in the inflow current IRU and outflow current IUS of the leg 104RS, a system frequency component contained in common in the inflow current ISV and outflow current IVT of the leg 104ST, and a system frequency component contained in common in the inflow current ITW and outflow current IWR of the leg 104TR are shown in Fig. 3 while being denoted with IGRS, IGST, and IGTR respectively. The system frequency components IGRS, IGST, and IGTR are in phase with the aforesaid leg voltages (VRS, VST, and VTS) respectively.

In Fig. 3, the foregoing currents and voltages represent the vector relationship of the high-voltage motor drive unit 102 to the side of the power system 101. In contrast, the vector relationship of the high-voltage motor drive unit 102 to the side of the AC motor 107 will be described below.

In this case, a voltage to be applied to each of the phases of the AC motor 107 (applied phase voltage of the AC motor 107: hereinafter, referred to as a motor phase voltage) is a voltage between a neutral point N and the junction point U, V, or W, and shall be denoted with VU, VV, or VW. The applied line voltage of the AC motor 107 at this time (hereinafter, referred to as a motor line voltage) shall be denoted with VUV, VVW, or VWU.

As currents on the side of the AC motor 107, phase currents IU, IV, and IW and motor frequency components IM are shown in Fig. 3. As for the motor frequency components IM, a motor frequency component contained in common in the currents IUS and ISV which flow through the clusters 105 is denoted with IMUV, a motor frequency component contained in common in the currents IVT and ITW which flow through the clusters 105 is denoted with IMVW, and a motor frequency component contained in common in the currents IWR and IRU which flow through the clusters 105 is denoted with IMWU.

Further, in Fig. 3, a voltage between the neutral point N of the AC motor 107 and the junction point R' , S' , or T' is shown and denoted with VR, VS, or VT.

In Fig. 3, the power factor of the high-voltage motor drive unit 102 with respect to the power system 101 and the power factor of the AC motor 107 with respect to the high-voltage drive unit 102 are substantially 1s. Even if the power factors are not 1s, a similar vector diagram can be drawn.

Fig. 3 is a vector diagram drawn with the system frequency components (IGRS, IGST, and IGTR) regarded as references. Therefore, if the system frequency and motor frequency are different from each other, although a triangle RST formed with the vectors of the system line voltages VGRS, VGST, and VGRS is fixed, a triangle UVW formed with the vectors of the motor phase voltages VU, VV, and VW is turned based on a difference frequency between the system frequency and motor frequency.

Fig. 3 may be interpreted as a vector diagram drawn with the motor frequency components (IMUV, IMVW, and IMWU) regarded as references. In this case, if the system frequency and motor frequency are different from each other, although the triangle UVW formed with the vectors of the motor phase voltages VU, VV, and VW is fixed, the triangle RST formed with the vectors of the system line voltages VGRS, VGST, and VGRS is turned based on the difference frequency between the system frequency and motor frequency.

To begin with, the principle on which the high-voltage motor drive unit 102 receives an active power from the power system 101 will be described by noting the RU-phase cluster 105RU and US-phase cluster 105US that are coupled to the R and S phases of the power system 101.

In Fig. 3, the phase of the leg voltage VRS (=VRU+VUS) of the RS-phase leg 104RS is caused to lag behind that of the system line voltage VGRS, and the tip of the vector VRS is controlled to meet, for example, the R' point, whereby the voltage VLRS across the reactor 103 becomes a voltage substantially orthogonal to the leg voltage VRS.

Since a current flowing through the reactor 103 is a current that lags 90° behind the voltage VLRS across the reactor 103, the current IGRS shown in Fig. 3 flows. The power factor to the current IGRS and leg voltage VRS is substantially 1. An active power flows from the power system 101 to the RU-phase cluster 105RU and US-phase cluster 105US that form the RS-phase leg 104RS.

As mentioned previously, the current IGRS is a system frequency component contained in common in the current IRU, which flows through the RU-phase cluster 105RU, and the current IUS that flows through the US-phase cluster 105US.

In the foregoing description, the RS-phase leg 104RS is taken for instance. The ST-phase leg 104ST and TR-phase leg 104TR act in a similar manner, though the phases are turned 120°.

Therefore, the current IGST that is a system frequency component is contained in common in the currents ISV and IVT that flow through the SV-phase cluster 105SV and VT-phase cluster 105VT respectively which are included in the ST-phase leg 104ST. The current IGTR that is a system frequency component is contained in common in the currents ITW and IWR that flow through the TW-phase cluster 105TW and WR-phase cluster 105WR respectively which are included in the TR-phase leg 104TR.

Next, the principle on which the high-voltage motor drive unit 102 feeds an active power to the AC motor 107 will be described by noting as an example the US-phase cluster 105US and SV-phase cluster 105SV that are coupled to the U and V phases respectively of the AC motor 107.

In Fig. 3, the line voltage VUV between the U and V phases of the AC motor 107 is seen to be expressed as VUV=VSV+VLST+VUS. Therefore, by controlling the output voltage VUS of the US-phase cluster 105RU and the output voltage VSV of the SV-phase cluster 105SV, the line voltage VUV to be applied to the AC motor 107 can be controlled. Not only the line voltage between the U and V phases but also the line voltage between the V and W phases or the line voltage between the W and U phases can be controlled by controlling the output voltages of the clusters.

The phase voltage VU, VV, or VW to be applied to the AC motor 107 is expressed as formula (1), formula (2), or formula (3) using the line voltage VUV, VVW, or VWU.

[Math. 1]

$$VU = (VUV - VWU)/3 \qquad\qquad (1)$$

[Math. 2]

$$VV = (VVW-VUV)/3 \qquad (2)$$

[Math. 3]

$$VW = (VWU-VVW)/3 \qquad (3)$$

If the voltage VU, VV, or VW is applied to the AC motor 107, the current IU, IV, or IW dependent on an equivalent impedance of the AC motor 107 flow. Therefore, as long as the power factor of the AC motor 107 is not zero, an active power can be fed from the high-voltage motor drive unit 102 to the AC motor 107.

The current IMUV that is a motor frequency component travels in common in the currents IUS and ISV that flow through the US-phase cluster 105US and SV-phase cluster 105SV respectively coupled to the U and V phases of the AC motor 107. The current IMUV of the motor frequency component is expressed as a formula (4).

[Math. 4]

$$IMUV = -(IU-IV)/3 \qquad (4)$$

Likewise, the current IMVW that is a motor frequency component travels in common in the currents IVT and ITW that flow through the VT-phase cluster 105VT and TW-phase cluster 105TW respectively. The current IMVW of the motor frequency component is expressed as a formula (5).

[Math. 5]

$$IMVW = -(IV-IW)/3 \qquad (5)$$

Likewise, the current IMWU that is a motor frequency component travels in common in the currents IWR and IRU that flow through the WR-phase cluster 105WR and RU-phase cluster 105RU respectively. The current IMWU of the motor frequency component is expressed as a formula (6).

[Math. 6]

$$IMWU = -(IW-IU)/3 \qquad (6)$$

Now, a control method for the voltage vectors of the clusters and the currents flowing through the clusters will be described below.

As apparent from the foregoing description, in order to receive an active power from the power system 101 and feed the active power to the AC motor 107, what will be described below should be carried out in relation to each of the phases. First, the vector of the voltage VRU of the RU-phase cluster 105RU should be controlled to be a vector extending from the U point in Fig. 3 to, for example, the R' point. The current IRU flowing through the RU-phase cluster 105RU becomes the sum of the system frequency component IGRS and motor frequency component IMWU.

Likewise, the vector of the voltage VUS of the US-phase cluster 105US should be controlled to be a vector extending from the S point in Fig. 3 to the U point. At this time, the current IUS flowing through the US-phase cluster 105US becomes the sum of the system frequency component IGRS and motor frequency component IMUV.

Likewise, the vector of the voltage VSV of the SV-phase cluster 105SV should be controlled to be a vector extending from the V point in Fig. 3 to, for example, the S' point. At this time, the current ISV flowing through the SV-phase cluster 105SV becomes the sum of the system frequency component IGST and motor frequency component IMUV.

Likewise, the vector of the voltage VVT of the VT-phase cluster 105VT should be controlled to be a vector extending from the T point in Fig. 3 to the V point. At this time, the current IVT flowing through the VT cluster 105VT becomes the sum of the system frequency component IGST and motor frequency component IMVW.

Likewise, the vector of the voltage VTW of the TW-phase cluster 105TW should be controlled to be a vector extending from the W point in Fig. 3 to, for example, the T' point. At this time, the current ITW flowing through the VT-phase cluster 105VT becomes the sum of the system frequency component IGTR and motor frequency component IMVW.

Likewise, the vector of the voltage VWR of the WR-phase cluster 105WR should be controlled to be a vector extending from the R point in Fig. 3 to the W point. At this time, the current IWR flowing through the WR-phase cluster 105R becomes the sum of the system frequency component IGTR and motor frequency component IMWU.

As mentioned above, when the power conversion unit shown in Fig. 1 is interposed between two three-phase AC facilities, transfer of a power can be achieved by performing as mentioned below. That is to say, control should be extended so that the sum of an active power produced with a frequency component of the first three-phase AC facility of an output voltage of each of the clusters and a frequency component of the first three-phase AC facility of a current flowing through each of the clusters, and an active power produced with a frequency component of the second three-phase AC facility of the output voltage of each of the clusters and a frequency component of the second three-phase AC facility of the current flowing through each of the clusters becomes substantially zero. Herein, the active powers may be read for reactive powers being controlled to be substantially constant.

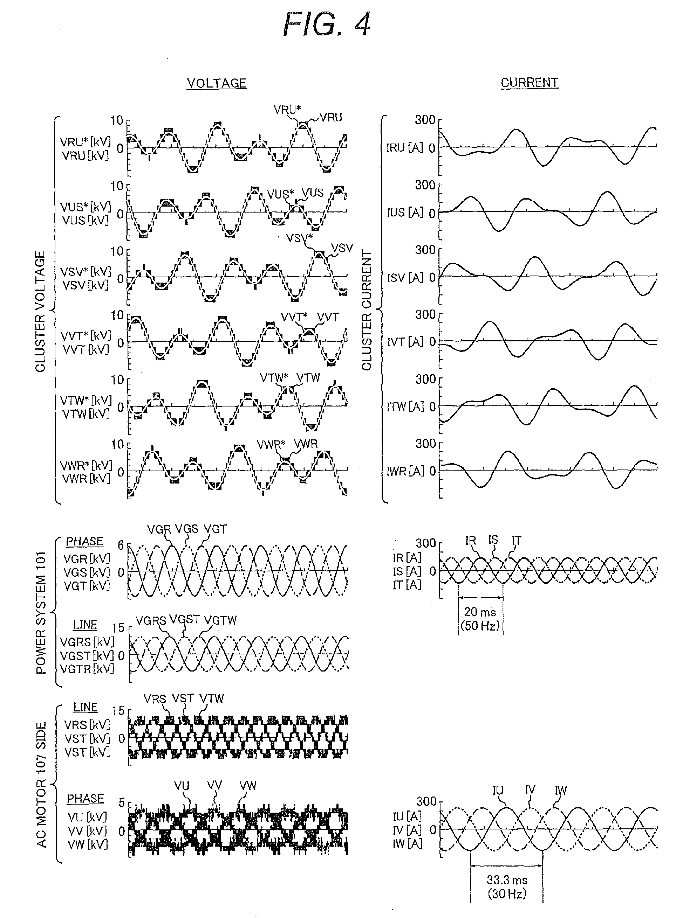

Fig. 4 shows examples of waveforms of voltages and currents observed at components in case the output voltages of the clusters 105 are controlled as mentioned above. In Fig. 4, the right side shows the waveforms of the currents, and the left side shows the waveforms of the voltages. The upper part shows an example of the waveforms of the voltages and currents of the clusters 105, the intermediate part shows an example of the waveforms of phase voltages, line voltages, and phase currents of the AC system 101, and the lower part shows an example of the waveforms of phase voltages, line voltages, and phase currents of the AC motor 107.

The drawing shows the examples of the waveforms of the voltages and currents on the assumption that the line voltage effective value of the power system 101 is 6.6 kV, the frequency thereof is 50 Hz, the line voltage effective value of the AC motor 107 is 3.96 kV, the frequency thereof is 30 Hz, and an active power is 1 MW. A carrier frequency employed in phase-shift PWM is 450 Hz.

In the drawing, the waveforms of the cluster voltages VRU, VUS, VSV, VVT, VTW, and VWR are shown to have command values VRU*, VUS*, VSV*, VVT*, VTW*, and VWR* thereof superimposed thereon with white lines.

As shown in Fig. 4, both a system frequency (50 Hz) component and motor frequency (30 Hz) component are seen to be present in the output voltages and currents of the respective clusters 105.

Next, a description will be made of the fact that the high-voltage motor drive unit 102 receives an active power from the power system 101.

In Fig. 3, the phases of fundamental-wave components of the output voltages VRS, VST, and VTR of the respective legs lag behind those of the line voltages VGRS, VGST, and VGTR respectively of the power system 101. Accordingly, the currents IGRS, IGST, and IGTR that are system frequency components substantially in phase with the voltages VRS, VST, and VTR respectively flow through the reactors 103.

A current obtained by performing delta-star transformation, which is expressed with formulas (7), (8), or (9), on the current IGRS, IGST, or IGTR is a current IR, IS, or IT that flows from the power system 101 to the high-voltage motor drive unit 102.

[Math. 7]

$$IR = IGRS-IGTR \qquad\qquad (7)$$

[Math. 8]

$$IS = IGST-IGRS \qquad\qquad (8)$$

[Math. 9]

$$IT = IGTR-IGSV \qquad\qquad (9)$$

The phases of the currents IR, IS, and IT are identical to the phases of the phase voltages VGR, VGS, and VGT respectively of the power system 101. This demonstrates that the high-voltage motor drive unit 102 receives an active power from the power system 101.

Next, a description will be made of the fact that the high-voltage motor drive unit 102 feeds an active power to the AC motor 107.

The applied phase voltages VU, VV, and VW of the AC motor 107 are substantially in phase with the currents IV, IV, and IW respectively that flow into the AC motor 107. This demonstrates that the high-voltage motor drive unit 102 feeds an active power to the AC motor 107.

Now, a method for controlling a DC capacitor voltage of each of the unit cells 106 will be described by taking for instance the RU-phase cluster 105RU.

For calculating an active power which the RU-phase cluster 105RU receives from the power system 101, it is necessary to note a system frequency component alone of each of voltages and currents. Therefore, it is necessary to perform calculation using a mean vector of each of the voltages and currents over one turn of the triangle UVW.

As seen from Fig. 3, a mean of the vector VRU over one turn of the triangle UVW is equal to a vector VR extending from the center N point of the triangle UVW to the R' point.

Therefore, as for a mean over one turn of the triangle UVW, an active power PGRU which the RU-phase cluster 105RU receives from the power system 101 is an inner product of the vector VR and vector IGRS, and expressed as a formula (10).

[Math. 10]

$$PGRU = VR \cdot IGRS \qquad (10)$$

For calculating an active power which the RU-phase cluster 105RU feeds the AC motor 107, it is necessary to note a motor frequency component alone of each of voltages and currents. Therefore, it is necessary to perform calculation using a mean vector of each of the voltages and currents over one turn of the triangle RST on the assumption that the triangle RST is turned with the triangle UVW fixed as a reference.

As seen from Fig. 3, a mean of the vector VRU over one turn of the triangle RST is equal to a vector extending from the U point to the center N point of the triangle UVW, that is, an inverse vector -VU of the vector VU.

Therefore, as for a mean over one turn of the triangle RST, an active power PMRU which the RU-phase cluster 105RU feeds to the AC motor 107 is an inner product of the vector -VU and vector IMWU, and expressed as a formula (11).

[Math. 11]

$$PMRU = -VU \cdot IMWU \qquad (11)$$

In the case of PGRU+PMRU<0, the DC capacitor voltage of each of the unit cells 106 included in the RU-phase cluster 105RU drops.

In the case of PGRU+PMRU>0, the DC capacitor voltage of each of the unit cells 106 included in the RU-phase cluster 105RU rises.

The power PGRU is controlled by controlling the vector VR that represents a mean value of the vector VRU over one turn of the triangle UVW. By sustaining a state in which the sum of the powers PGRU and PMRU is substantially zero, the DC capacitor voltage of each of the unit cells included in the RU-phase cluster 105RU can be controlled to be constant.

The foregoing description is made by taking for instance the RU-phase cluster 105RU. The other clusters can be controlled in the same manner.

The principle of operation of the high-voltage motor drive unit 102, the examples of waveforms of voltages and currents, and the DC capacitor voltage control method have been described so far.

In comparison with a case where a high-voltage motor drive unit to be linked to a 6. 6-kV system in a transformer-less manner is formed using two MMCs, a reason why the number of IGBTs (whose blocking voltage is 4.5 kV) necessary for the high-voltage motor drive unit 102 in accordance with the present invention can be reduced from 144 to 120 will be described below.

In the example shown in Fig. 4, the line voltage of the AC motor 107 is 3.96 kV. As a high-voltage motor drive unit, it is desirable that a voltage up to 6.6 kV which is equal to that of the power system 101 can be applied to the AC motor 107. In this case, in the vector diagram of Fig. 3, the size of the triangle UVW is consistent with the size of the triangle RST.

Since the triangle UVW turns, there arises, for example, a case where the U point coincides with the T point, or an instant when each of the clusters outputs up to 6.6 kV that is the line voltage of the power system 101. Therefore, each of the clusters has to be able to output up to substantially 6. 6 kV that is the line voltage of the power system 101.

When four IGBTs whose blocking voltage is 4.5 kV and four antiparallel diodes are used to form the unit cell (full bridge circuit) shown in Fig. 2, assuming that the DC capacitor voltage is 2.25 kV which is 50% of the blocking voltage of the IGBTs and the maximum modulation factor is 0.9, a voltage one unit cell can output is 2.25 kV/√2×0.9 approximately equal to 1.43 kV.

The number of unit cells included in one cluster has to be equal to or larger than five that is a minimum integer exceeding 6.6/1.43 approximately equal to 4.6. Therefore, the present embodiment has been described on the assumption that the number of unit cells included in each cluster is five.

When the number of unit cells included in one cluster is five, the number of IGBTs included in the entire high-voltage motor drive unit 102 comes to 4x5x6=120.

For the foregoing reason, the number of IGBTs can be reduced to 120, though 144 IGBTs are needed in the related art employing two MMCs.

Since one reactor 103 is included in one leg 104, three reactors are included in the entire high-voltage motor drive unit 102.

For the foregoing reason, the number of reactors can be reduced to three, though twelve reactors are needed in the related art employing two MMCs.

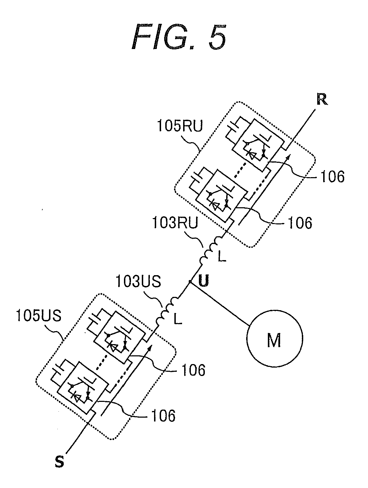

The number of reactors included in each of the legs 104RS, 104ST, and 104TR shown in Fig. 1 is one. A leg having two reactors (103RU and 103US) coupled to each other as shown in Fig. 5 may be substituted for each of the legs 104RS, 104ST, and 104TR. Nevertheless, the legs can be operated as a high-voltage motor drive unit. In this case, the number of reactors in the entire high-voltage motor drive unit 102 is six. Nevertheless, the number of reactors can be reduced compared with twelve that is the number of reactors needed in the related art employing two MMCs.

In the present embodiment, the power system 101 is coupled to the R point, S point, and T point, and the AC motor 107 is coupled to the U point, V point, and W point. Even when the power system 101 is coupled to the U point, V point, and W point and the AC motor 107 is coupled to the R point, S point, and T point, the same advantage can be provided.

The present embodiment has been described by taking for instance a case where a high-voltage motor drive unit is linked to the 6.6-kV system in a transformer-less manner and IGBTs whose blocking voltage is 4.5 kV are employed. Even if the line voltage of the power system 101 is different from 6.6 kV, the transformer is disposed between the power system 101 and high-voltage motor drive unit 102, or IGBTs (or any other on-off control switching elements) whose blocking voltage is different from 4.5 kV are employed, the present invention can be applied.

The present embodiment has been described on the assumption that the unit cell 106 is a full bridge circuit. If the unit cell 106 is a half bridge circuit, three-level full bridge circuit, or the like, or if the unit cell 106 can output a positive, negative, or zero voltage, and includes an energy storage element such as a capacitor, the unit cell 106 can be used as it is in place of the full bridge circuit.

Second Embodiment

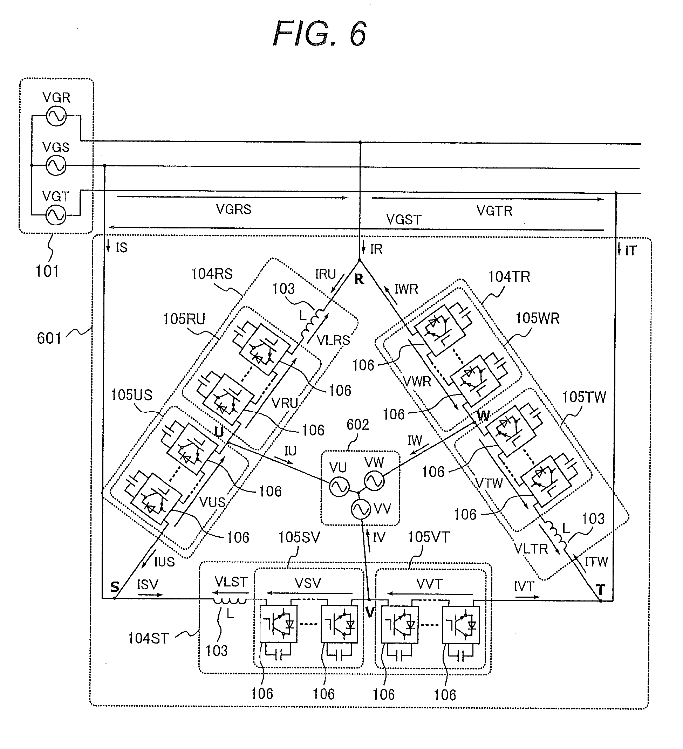

A second embodiment of the present invention will be described in conjunction with Fig. 6.

The present embodiment is such that a unit which interchanges a power between two power systems is formed using a power conversion unit in accordance with the present invention.

In the present embodiment, a second power system 602 is coupled to the U, V, and W points in substitution for the AC motor 107 of the first embodiment in order to form a power interchange unit 601 that interchanges a power between the power system 101 and second power system 601. In the first embodiment shown in Fig. 1, the power conversion unit of the present invention is adapted to a high-voltage motor drive unit as an embodiment unit that has the advantage of being able to provide a variable amplitude or frequency. In the second embodiment shown in Fig. 6, the power interchange unit 601 can be realized using both the power systems as power supplies. The power interchange unit 601 is a frequency conversion facility for, for example, conversion between 50 Hz and 60 Hz.

Specifically, in the power conversion unit of the present invention, one of three-phase AC facilities coupled to the power conversion unit is a power supply, and the other three-phase AC facility coupled to the power conversion unit is a power supply or load. Thus, the power interchange unit 601 or high-voltage motor drive unit can be realized.

In the present embodiment, the power system 101 shall be called a "first power system 101." For the first power system 101, the RU-phase cluster 105RU and US-phase cluster 105US operate as a first pair coupled to the R and S phases of the power system 101, the SV-phase cluster 105SV and VT-phase cluster 105VT operate as a second pair coupled to the S and T phases of the power system 101, and the TW-phase cluster 105TW and WR-phase cluster 105WR operate as a third pair coupled to the T and R phases of the power system 101. The pairs transfer an active power to or from the first power system 101.

The principle on which the power interchange unit 601 transfers an active power to or from the first power system 101 is identical to that described in relation to the first embodiment.

For the "second power system 602," the US-phase cluster 105US and SV-phase cluster 105SV act as a first pair coupled to the U and V phases of the AC motor 107, the VT-phase cluster 105VT and TW-phase cluster 105TW act as a second pair coupled to the V and W phases of the AC motor 107, and the WR-phase cluster 105WR and RU-phase cluster 105RU act as a third pair coupled to the W and R phases of the AC motor 107. The pairs transfer an active power to or from the second power system 602.

The principle on which the power interchange unit 601 transfers an active power to or from the second power system 602 will be described below.

Control is extended so that the phase of the sum VUS+VSV of the outputs of the US-phase cluster 105US and SV-phase cluster 105SV lags behind that of the difference VU-VV of the line voltages to the U and V phases of the second power system 602, whereby a voltage that leads the difference VU-VV by a phase of substantially 90° is impressed on the applied voltage VLST of the reactor 103 of the ST-phase leg 104ST.

As a result, a current substantially in phase with the difference VU-VV flows through the reactor 103, and the current is contained as a frequency component of the second power system in the current IUS that flows through the US-phase cluster 105US and the current ISV that flows through the SV-phase cluster 105SV. Therefore, the US-phase cluster 105US and SV-phase cluster 105SV receive an active power from the second power system 602.

Control is extended so that the phase of the sum VUS+VSV of the output voltages of the US-phase cluster 105US and SV-phase cluster 105SV leads the difference VU-VV of the line voltages to the U and V phases of the second system 602, whereby a voltage that lags the difference VU-VV by a phase of substantially 90° is impressed on the applied voltage VLST of the reactor 103 of the ST-phase leg 104ST.

As a result, a current whose phase is substantially opposite to that of the difference VU-VV flows through the reactor 103, and the current is contained as a frequency component of the second power system in the current IUS that flows through the US-phase cluster 105US and the current ISV that flows through the SV-phase cluster 105SV. Therefore, the US-phase cluster 105US and SV-phase cluster 105SV feed an active power to the second power system 602. As for the other phases, the clusters act in the same manner, though the phases are turned 120°.

Even if the voltages and frequencies of the first power system 101 and second power system 602 are different from each other, the power interchange unit 601 can interchange an active power between the first and second power systems.

Third Embodiment

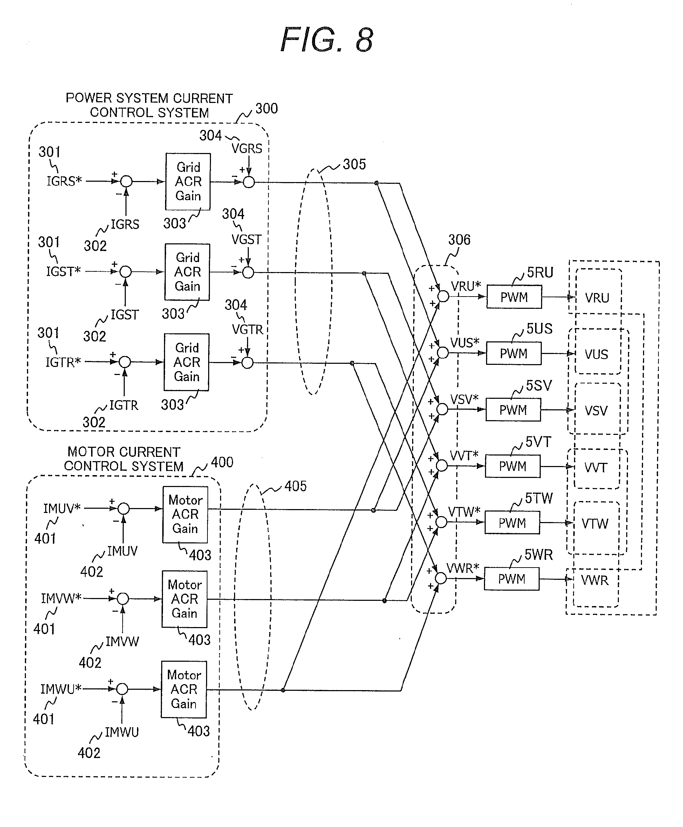

A third embodiment of the present invention will be described in conjunction with Fig. 8. Herein, a control arrangement for controlling the power conversion unit shown in Fig. 1 or Fig. 6 will be described below.

The control arrangement for the power conversion unit includes a control system for one of three-phase AC facilities (power system 101), and a control system for the other three-phase AC facility (AC motor 107 or power system 602). In the example shown in Fig. 3, the control system for one of the three-phase AC facility (power system 101) is, for example, a power system current control system 300, and the control system for the other three-phase AC facility (AC motor 107) is, for example, a motor current control system 400.

The control system 300 or 400 obtains a feedback signal 302 or 402 relevant to a target signal 301 or 401, executes a predetermined arithmetic 303 or 403, and obtains a control signal 305 or 405. The control is implemented in a quantity of electricity on an appropriate one of the lines.

To be more specific, for realizing a high-voltage motor drive unit, the target signal 301 for the power system current control system 300 serves as a current command for fetching a power, which is needed to control the voltage of the DC capacitor 203 of each of the unit cells 106 so that the voltage remains constant, from the power system. The current command 301 is a current on each of the lines of the power system 101. In the arithmetic 303, a voltage signal 304 is added to a signal, which is obtained by multiplying a current deviation signal by a predetermined gain, in order to obtain the control signal 305.

The target signal 401 for the power system current control system 400 is obtained by applying the formula (4), (5), or (6) to the values of phase currents IU, IV, or IW determined with a requirement for a mechanical load of a motor (the number of revolutions or torque). The current command 401 is a current on each of the lines of the AC motor 107. In the arithmetic 403, a current deviation signal is multiplied by a predetermined gain in order to obtain the control signal 405.

As mentioned above, the control signal 305 or 405 to be calculated according to the situation of each of the power system 101 and AC motor 107 that are three-phase AC facilities is prepared for each of the lines. By the way, a practical operating end of the power conversion unit includes six clusters, and a PWM control circuit 5 is provided for each of the clusters.

Now, the control signal 305 or 405 is a control signal on each of the lines of the power system 101 or AC motor 107, while the PWM control circuit 5 included in the operating end is disposed in units of a cluster. Therefore, talking of, for example, the PWM control circuit 5RU of the cluster 105RU, the cluster voltage VRU is determined with a WU-phase control signal 305 out of the control signals 305 obtained from the power system 101 and an RS-phase control signal 405 out of the control signals 405 obtained from the AC motor 107. The same relationship is established for the other cluster voltages.

This signifies that by controlling each cluster voltage using the control signals 305 and 405 on the respective sides of the power system 101 and AC motor 107, a cluster voltage capable of satisfying the control requirements for the power system and AC motor can be obtained.

In the control circuit shown in Fig. 8, three control signals of the power system current control system 300 are each bisected in units of a phase, and three control signals of the motor current control system 400 are each bisected in units of a phase. In an adder circuit group 306, control signals associated with each of the clusters are added up in order to produce a cluster control signal.

As mentioned above, in control of the power conversion unit, for the power system 101, a control action is performed by regarding two clusters (for example, cluster 105RU and cluster 105US) of a leg (for example, 104RS) coupled to the lines of the power system 101 as a first pair. For the AC motor 107, a control action is performed by regarding two clusters (for example, cluster 105RU and cluster 105WR) coupled to the lines of the AC motor 107 as a second pair.

Industrial Applicability

The present invention can widely be adapted to motor control, a variable-frequency power supply, or the like despite the simple configuration.

List of Reference Signs

101: power system, 102: high-voltage motor drive unit, 103: reactor, 104: leg, 105: cluster, 106: unit cell, 107: AC motor, 201XH: X-phase upper IGBT, 201XL: X-phase lower IGBT, 201YH: Y-phase upper IGBT, 201YL: Y-phase lower IGBT, 202XH: X-phase upper antiparallel diode, 202XL: X-phase lower antiparallel diode, 202YH: Y-phase upper antiparallel diode, 202YL: Y-phase lower antiparallel diode, 203: DC capacitor, 103RU: RU-phase reactor, 104US: US-phase reactor, 601: power interchange unit, 602: second power system.

**Claims**

1.  A power conversion unit, wherein:

    a leg is formed by coupling in series with one another a reactor, a first cluster that is a series body of a plurality of unit cells, and a second cluster that is a series body of a plurality of unit cells;
    three legs are delta-connected;
    three junction points of the delta-connected legs are coupled to the respective phases of a first three-phase AC facility; and
    junction points between the first and second clusters of the legs are coupled to the respective phases of a second three-phase AC facility.

2.  The power conversion unit according to claim 1, wherein one of the first three-phase AC facility and second three-phase AC facility is a power system.

3.  The power conversion unit according to claim 1, wherein both of the first three-phase AC facility and second three-phase facility are power systems.

4.  The power conversion unit according to claim 1, wherein the first three-phase AC facility is a power system, and the second three-phase facility is a motor.

5.  The power conversion unit according to any of claims 1 to 4, wherein the unit cells are two-terminal elements capable of outputting an arbitrary voltage.

6.  The power conversion unit according to any of claims 1 to 4, wherein the unit cells can output a positive, negative, or zero voltage, and are each provided with an energy storage element.

7.  The power conversion unit according to any of claims 1 to 4, wherein each of the unit cells is formed with a full bridge circuit.

8.  A control arrangement for a power conversion unit in which a leg is formed by coupling in series with one another a reactor, a first cluster that is a series body of a plurality of unit cells, and a second cluster that is a series body of a plurality of unit cells, three legs are delta-connected, three junction points of the delta-connected legs are coupled to the respective phases of a first three-phase AC facility, and junction points between the first and second clusters of the legs are coupled to the respective phases of a second three-phase AC facility, wherein:

the control arrangement has a control function for extending control so that the sum of an active power produced with a frequency component of the first three-phase AC facility of an output voltage of each of the clusters and a frequency component of the first three-phase AC facility of a current flowing through each of the clusters, and an active power produced with a frequency component of the second three-phase AC facility of the output voltage of each of the clusters and a frequency component of the second three-phase AC facility of the current flowing through each of the clusters becomes substantially zero.

9. A control arrangement for a power conversion unit in which a leg is formed by coupling in series with one another a reactor, a first cluster that is a series body of a plurality of unit cells, and a second cluster that is a series body of a plurality of unit cells, three legs are delta-connected, three junction points of the delta-connected legs are coupled to the respective phases of a first three-phase AC facility, and junction points between the first and second clusters of the legs are coupled to the respective phases of a second three-phase AC facility, wherein:

the control arrangement has a control function for extending control so that the sum of a reactive power produced with a frequency component of the first three-phase AC facility of an output voltage of each of the clusters and a frequency component of the first three-phase AC facility of a current flowing through each of the clusters, and a reactive power produced with a frequency component of the second three-phase AC facility of the output voltage of each of the clusters and a frequency component of the second three-phase AC facility of the current flowing through each of the clusters becomes substantially zero.

10. A control arrangement for a power conversion unit in which a leg is formed by coupling in series with one another a reactor, a first cluster that is a series body of a plurality of unit cells, and a second cluster that is a series body of a plurality of unit cells, three legs are delta-connected, three junction points of the delta-connected legs are coupled to the respective phases of a first three-phase AC facility, and junction points between the first and second clusters of the legs are coupled to the respective phases of a second three-phase AC facility, wherein:

three first control signals are obtained with the line currents of the first three-phase AC facility regarded as target signals;
three second control signals are obtained with the line currents of the second three-phase AC facility regarded as target signals; and
the first and second clusters of each of the legs are controlled based on a sum signal of the first control signal and second control signal on the lines involved with the clusters.

# FIG. 1

# FIG. 2

# FIG. 3

FIG. 4

17

# FIG. 5

# FIG. 6

# FIG. 7

| | 201 | | | | |
|---|---|---|---|---|---|
| | XH | XL | YH | YL | VRU1 |
| CASE 1 | 1 | 0 | 1 | 0 | 0(V) |
| CASE 2 | 1 | 0 | 0 | 1 | VCRU1(V) |
| CASE 3 | 0 | 1 | 0 | 1 | 0(V) |
| CASE 4 | 0 | 1 | 1 | 0 | −VCRU1(V) |

# FIG. 8

## INTERNATIONAL SEARCH REPORT

| International application No. |
| --- |
| PCT/JP2011/064520 |

A. CLASSIFICATION OF SUBJECT MATTER
*H02M5/293*(2006.01)i, *H02M5/297*(2006.01)i

According to International Patent Classification (IPC) or to both national classification and IPC

B. FIELDS SEARCHED

Minimum documentation searched (classification system followed by classification symbols)
H02M5/293, H02M5/297

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| A | JP 11-252992 A  (Yaskawa Electric Corp.), 17 September 1999 (17.09.1999), fig. 1 (Family: none) | 1-10 |
| A | JP 2011-45210 A  (The Kansai Electric Power Co., Inc.), 03 March 2011 (03.03.2011), fig. 1 (Family: none) | 1-10 |
| A | DE 3205949 A1  (Schaitbau GmbH), 01 September 1983 (01.09.1983), fig. 1 (Family: none) | 1-10 |

☐ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 24 August, 2011 (24.08.11) | Date of mailing of the international search report 06 September, 2011 (06.09.11) |
| --- | --- |
| Name and mailing address of the ISA/ Japanese Patent Office | Authorized officer |
| Facsimile No. | Telephone No. |

Form PCT/ISA/210 (second sheet) (July 2009)